## Europäisches Patentamt
## European Patent Office
## Office européen des brevets

(19)

(11) Numéro de publication: **0 089 866**
**B1**

(12)

# FASCICULE DE BREVET EUROPEEN

(45) Date de publication du fascicule du brevet:
**19.06.85**

(51) Int. Cl.⁴: **B 64 F 5/00**

(21) Numéro de dépôt: **83400462.4**

(22) Date de dépôt: **07.03.83**

(54) Dispositif d'attache combiné pour le transport et le hissage d'une turbomachine.

(30) Priorité: **08.03.82 FR 8203807**

(43) Date de publication de la demande:
**28.09.83 Bulletin 83/39**

(45) Mention de la délivrance du brevet:
**19.06.85 Bulletin 85/25**

(84) Etats contractants désignés:
**DE FR GB**

(56) Documents cités:
**Néant**

(73) Titulaire: **SOCIETE NATIONALE D'ETUDE ET DE CONSTRUCTION DE MOTEURS D'AVIATION, "S.N.E.C.M.A.", 2 Boulevard Victor, F-75015 Paris (FR)**

(72) Inventeur: **Debeneix, Pierre, 31, route d'Etrelles, F-77930 Saint Sauveur sur Ecole (FR)**

(74) Mandataire: **Moinat, François, S.N.E.C.M.A. Service des Brevets Boîte Postale 81, F-91003 Evry Cedex (FR)**

BUNDESDRUCKEREI BERLIN

## Description

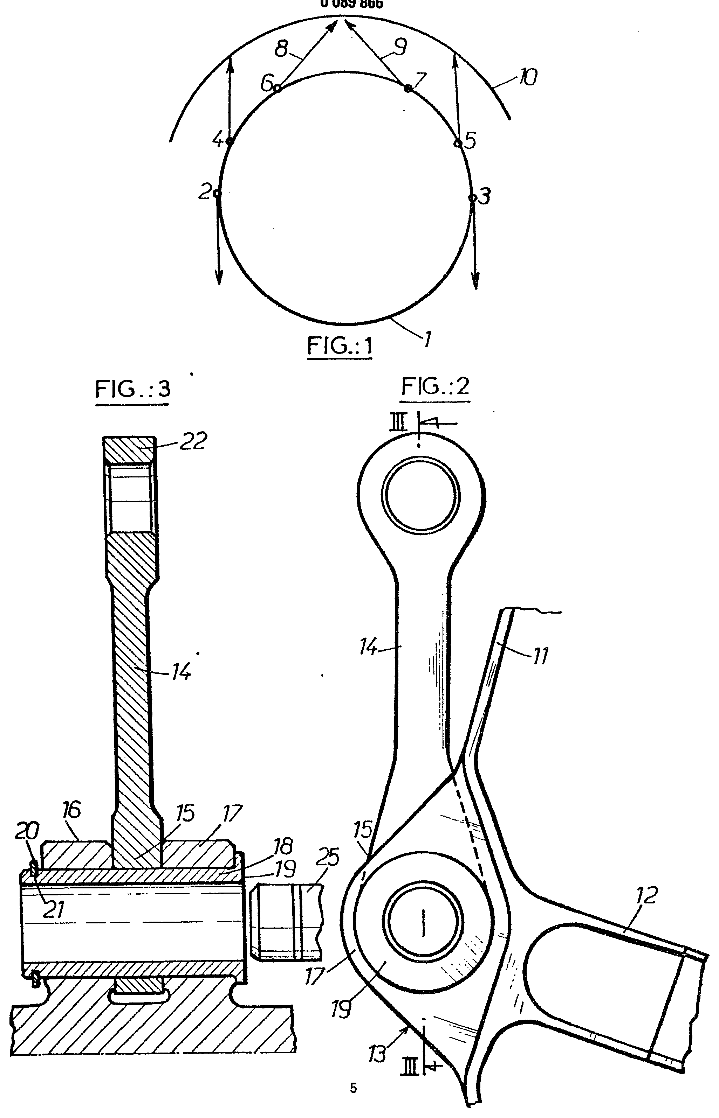

L'invention concerne un dispositif d'attache combiné pour le transport et le hissage d'une turbomachine dans une cellule d'avion, ledit dispositif, fixé sur le carter de la turbomachine, comprend des moyens de fixation au chariot de transport et des moyens pour le hissage de la turbomachine en position dans la cellule. Un tel dispositif est déjà connu (Voir figure 1).

Classiquement, le carter principal d'une turbomachine porte un certain nombre d'éléments disposés symétriquement deux à deux par rapport au plan vertical de symétrie du carter et destinés

— à la fixation du groupe sur un chariot de transport utilisé pour la mise en place et le retrait du groupe dans la cellule ainsi que son positionnement longitudinal;

— à la fixation des moyens de hissage mermettant le relevage ou la pose du groupe sur le chariot de transport et son positionnement dans le sens vertical pour sa fixation à la cellule;

— à la fixation du groupe à la cellule à l'aide par exemple de biellettes.

Du fait de la spécificité de chaque couple d'éléments, ceux-ci se trouvent répartis sur un secteur du carter assez important, ce qui nécessite un renforcement de cette zone avec pour conséquences une mauvaise répartition des efforts et une augmentation de la masse de la turbomachine.

Les constructeurs ont essayé de simplifier et d'alléger les systèm de fixation et de hissage. C'est ainsi que le document FR-A-2 326 327 décrit un dispositif permettant le déplacement vertical d'une turbomachine par l'utilisation d'un élément unique. Cet élément est constitué d'une cheville fixée verticalement sur le sommet du carter et servant au centrage du groupe par rapport à un palier fixé à la partie haute de la cellule. La cheville est munie selon son axe longitudinal de moyens pour la fixation d'un dispositif de hissage passant au travers du palier et permettant, à l'aide d'un treuil, la mise en place verticale ou le démontage du groupe. Le groupe est fixé classiquement à la cellule par des bielles latérales.

Ce dispositif permet la suppression d'un point de hissage et du système de hissage, indépendant de l'ensemble, mais présente l'inconvénient de soumettre une zone restreinte du carter à des tensions importantes.

Le document FR-A-2 453 779 montre un dispositif dans lequel les bielles de fixation et les moyens de hissage sont confondus. Le carter de la turbomachine porte symétriquement par rapport à son plan vertical de symétrie deux bielles articulées sur des chapes solidaires du carter. L'autre extrémité des bielles coopère avec un ensemble de liaison et de levage. Cet ensemble porte du côté de la bielle un système de déplacement linéare à vis et écrou et est suspendu à la cellule par une articulation sphérique.

Outre la diminution du nombre d'éléments assurant la fixation et le levage, ce dispositif est d'un faible encombrement et permet une réduction des espaces morts par rapport aux fixations classiques.

L'invention vise également à fournir un dispositif pour le transport et le hissage d'une turbomachine comportant un nombre réduit d'éléments, assurant une meilleure répartition des forces sur l'enveloppe du moteur et permettant en outre de libérer un certain nombre de bras pour des fonctions acessoires.

L'invention est révébé dans le revendication 1. Differents modes de réalisation de l'invention fout l'objet des sous-revendications.

Les explications et figures données ci-après à titre d'exemple permettront de comprende comment l'invention peut être réalisée.

La figure 1 représente schématiquement la disposition classique des éléments de fixation des moyens de transport, des moyens de hissage et des bielles de fixation.

La figure 2 est une vue en élévation du dispositif de fixation des moyens de transport et des moyens de hissage.

La figure 3 est une vue en coupe selon III III de la figure 2.

Les figures 4, 5, 6 sont des vues partielles en perspective de différents systèmes de fixation des moyens de transport au dispositif selon l'invention.

La figure 1 montre schématiquement la disposition classique des éléments de fixation sur un carter de turbomachine. Le carter 1 porte, selon son diamètre horizontal, deux éléments 2, 3 sur lesquels viennent se placer les moyens de transport, qui, selon différents modes de réalisation, peuvent être constitués par des galets roulant sur des rails fixés latéralement sur les côtés opposés de la cellule, ou par les extrémités des bras d'un chariot se déplaçant sur une voie prévue, par exemple, à la partie inférieure de la cellule. La moitié supérieure du carter porte quatre éléments 4, 5 et 6, 7 symétriques deux à deux par rapport au plan de symétrie vertical du moteur. Les éléments 4 et 5 reçoivent les moyens de hissage permettant la libération des moyens de transport et la suspension du carter à la cellule 10 à l'aide des éléments 6, 7 et des moyens de fixation associés 8, 9.

Si les efforts sont convenablement répartis dans la peau du carter par les éléments de fixation 2 et 3 diamétralement opposés, il n'en est pas de même pour les points de hissage 4 et 5 qui nécessitent un renforcement du carter. Ces points 4 et 5 sont généralement fixés à l'extrémité de deux bras internes qui coopèrent avec d'autres bras pour assurer la résistance et la rigidité du carter principal de la turbomachine. La nécessité de refroidir les paliers des rotors sans augmenter la complexité du moteur, a amené la Demanderesse à utiliser les bras pour amener l'air de refroidissement. Il n'est plus possible dans ce cas de fixer les éléments de hissage à l'extrémité des bras et le déplacement de ces éléments aurait nécessité un renforcement local du carter, incompatible avec les impératifs de la construction.

Cette difficulté a été vaincue par la réalisation d'un dispositif d'attache combiné pour le transport et le hissage du groupe turbopropulseur.

Les points de hissage définis par les éléments 4 et 5 (figure 1) ont été ramenés aux points 2, 3 servant au transport du groupe, après désaccouplage de la cellule, pour former un dispositif combiné.

La figure 2 montre, vue en élévation, une forme de réalisation d'un élément du dispositif selon l'invention. Une portion du carter d'échappement 11 du groupe motopropulseur est représenté en coupe et montre un bras 12 interne non utilisé pour le refroidissement, reliant la virole interne à la virole externe du carter. A la surface extérieure du carter et à l'extrémité du bras 12, est fixée une chape 13. La tête 15 d'une bielle 14 est maintenue entre les branches 16, 17 de la chape par une douille 18 dont la surface extérieure coopère avec des alésages coaxiaux prévus dans les branches 16, 17 et avec l'oeil de la tête de bielle 14. La douelle est immobilisée dans la chape par une collerette 19, prévue à une de ses extrémités s'appuyant contre la branche 17 et à l'autre extrémité par un jonc d'arrêt élastique 20 coopérant avec une gorge 21 formée dans la surface extérieure de la douille et formant butée vis-à-vis de la branche 16.

L'oeil de la tête de bielle 22 reçoit une partie des moyens de hissage permettant le positionnement vertical du groupe turbopropulseur.

Le dispositif combiné de transport et de hissage est constitué de deux éléments comme ci-dessus décrits, disposés sur le carter selon le diamètre horizontal du groupe turbopropulseur et d'éléments appartenant aux moyens de transport conçus de manière à coopérer avec la chape, la bielle étant dans la chape.

Le groupe est transféré à l'aide d'un chariot présentant, de manière connue, un berceau approximativement en forme de U. Les extrémités des branches du U comportent des éléments permettant de soutenir au moins provisoirement le groupe par l'intermédiaire du dispositif fixé au carter.

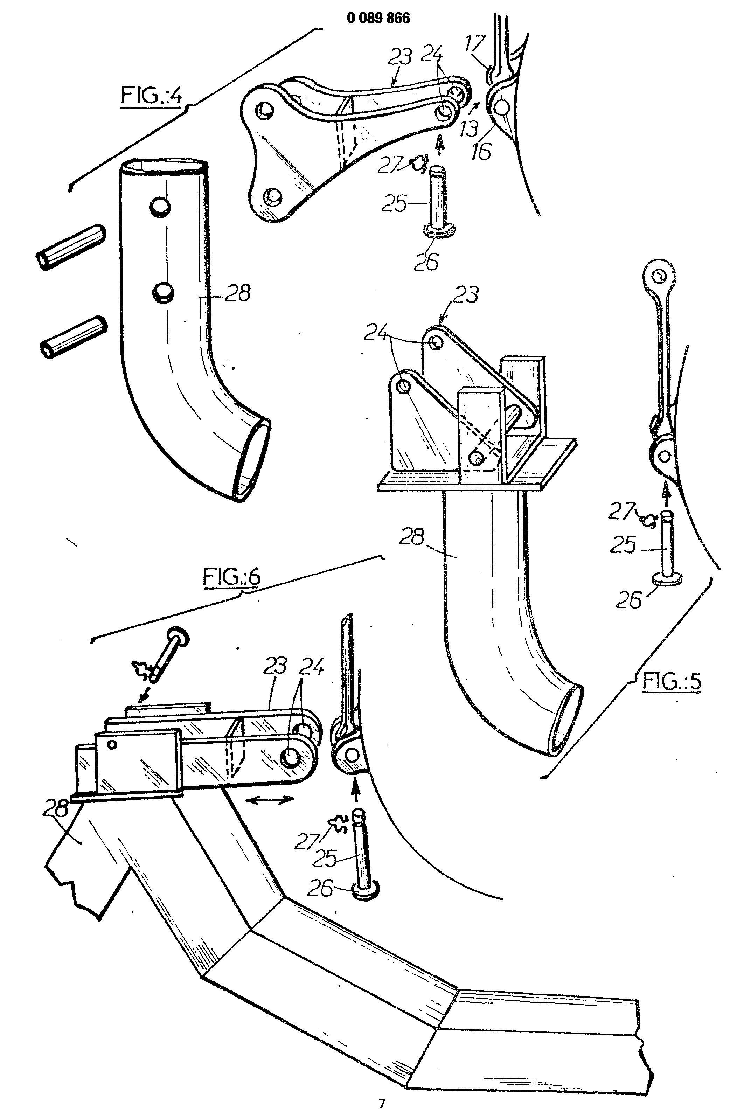

Ces éléments présentent une partie en forme de chape 23 (figures 4 à 6) qui vient se placer de part et d'autre des branches 16, 17 des chapes fixées au carter. Des alésages 24, prévus dans les branches des chapes 23, correspondant aux alésages prévus dans la chape 13 et avec lesquels ils sont mis en alignement, reçoivent un axe 25 comportant à une de ses extrémités une butée 26 et à l'autre un clip 27. Cet axe 25 supporte, par l'intermédiaire de la douille 18 (voir figure 3), le poids du groupe qui est transmis par la chape 23 aux bras 28 du chariot.

Le transport et le hissage d'un groupe turbopropulseur mettant en œuvre le dispositif selon l'invention est le suivant: le groupe étant fixé à la cellule de l'avion par ses biellettes de fixation, on place les bielles 14 des moyens de hissage dans les chapes 13, de manière à mettre l'oeil de la tête de bielle dans l'alignement des alésages des branches 16 et 17 de la chape 13.

On introduit les douilles 18 dans la chape 13 et les yeux des bielles 14 et on les fixe à l'aide de leurs joncs élastiques. On accroche les têtes libres des bielles aux moyens de hissage et l'on amène le chariot de transport en position sous le groupe. En agissant sur les moyens de hissage après avoir démonté les biellettes de fixation, on amène l'axe de la douille 18 en alignement avec l'axe 24 des alésages des chapes 23 prévues aux extrémités des bras du chariot. On introduit les axes 25 dans l'ensemble douille-chape, on les verrouille longitudinalement par les chapes 16 et on fait alors reposer le groupe sur les bras du chariot. On désaccouple les bielles 14 des moyens de hissage. Le groupe peut alors être sorti de la cellule.

Le remontage du groupe s'opère de manière inverse, les bielles étant montées dans les chapes avant les opérations de transport.

Les avantages que présente le dispositif combiné pour le transport et le hissage d'un groupe motopropulseur, sont les suivants:

—   libération d'un certain nombre des bras radiaux pour d'autres usages et notamment comme passage d'air de refroidissement;
—   gain de masse par suite de la suppression des deux points de fixation pour le hissage;
—   meilleure répartition des efforts de hissage qui s'exercent suivant la peau du carter.

**Revendications**

1. Dispositif d'attache combiné pour le transport et le hissage d'un groupe turbomachine dans une cellule (10) d'avion, ledit dispositif fixé sur le carter (11) de la turbomachine comprenant des moyens de fixation au chariot de transport et des moyens pour le hissage de la turbomachine en position dans la cellule (10), caractérisé en ce que les moyens de fixation au chariot de transport et les moyens de hissage sont formés d'éléments communs constitués de deux chapes (13) fixées sur le carter (11) selon un diamètre horizontal, les branches (16, 17) des chapes (13) portant des alésages coaxiaux, chaque chape (13) recevant de manière amovible une douille (18) coopérant par sa surface extérieure avec les alésages et un des yeux (15) d'une bielle (14) dont l'autre oeil (22) coopère avec les moyens de hissage, et par sa surface intérieur avec au moins un élément (25) des moyens de transport.

2. Dispositif selon la revendication 1, caractérisé en ce que les douilles (18) présentent à une extrémité une collerette (19) butant contre une des branches de la chape (13) et à l'autre extrémité, une gorge (21) recevant un jonc élastique (20) butant contre l'autre branche de la chape.

3. Dispositif selon la revendication 1 ou 2, caractérisé en ce que l'élément (25) des moyens de fixation au chariot de transport est constitué par un axe présentant une butée (26) à une extrémité et un clip (27) à l'autre extrémité.

4. Dispositif selon l'un des revendications 1 à 3, caractérisé en ce que l'élément (25) des moyens de fixation au chariot de transport coopère avec une chape (23) fixée à l'extrémité des bras du chariot de transport, ladite chape présentant dans ses branches des alésages coaxiaux susceptibles d'être placés coaxialement avec la douille (18) pour recevoir l'élément (25) des moyens de fixation au chariot de transport.

**Patentansprüche**

1. Kombinierte Befestigungseinrichtung für das Transportieren und das Heben eines Turbomaschinenblocks in eine Flugzeugzelle (10), wobei diese Vorrichtung an dem Gehäuse der Turbomaschine befestigt ist und Mittel zur Fixierung an dem Transportwagen sowie Hebemittel zum Heben der Turbomaschine in ihre Position in der Zelle (10) umfaßt, dadurch gekennzeichnet, daß die Mittel zur Fixierung an dem Transportwagen und die Hebemittel von gemeinsamen Elementen gebildet sind, die aus zwei Gabelbügeln (13) bestehen, welche an Positionen, die einer horizontalen Durchmesserlinie entsprechen, an dem Gehäuse (11) befestigt sind, daß die Schenkel (16, 17) der Gabelbügel (13) koaxiale Bohrungen tragen, und daß jeder Gabelbügel (13) eine herausnehmbare Buchse (18) aufnimmt, die über ihre Innenfläche mit wenigstens einem Element (25) der Mittel zur Fixierung an dem Transportwagen und über ihre Außenfläche mit den genannten Bohrungen und einem Auge (15) einer Pleuelstange (14) zusammenarbeitet, deren anderes Auge (22) mit den Hebemitteln zusammenwirkt.

2. Vorrichtung nach Anspruch 1, dadurch gekennzeichnet, daß die Buchsen (18) an einem Ende einen an einem der Schenkel des Gabelbügels (13) anliegenden Kragen (19) und an dem anderen Ende eine Kehle (21) für die Aufnahme eines zur Anlage an dem anderen Schenkel des Gabelbügels bestimmten elastischen Sprengrings (20) besitzen.

3. Vorrichtung 1 oder 2, dadurch gekennzeichnet, daß das Element (25) der Mittel zur Fixierung an dem Transportwagen ein Achsstück ist, das an einem Ende einen Anschlag (26) und an dem anderen Ende eine Klammer (27) trägt.

4. Vorrichtung nach einem der Ansprüche 1 bis 3, dadurch gekennzeichnet, daß das Element (25) der Mittel zur Befestigung an dem Transportwagen mit einem der an dem Ende der Arme des Transportwagens befestigten Bügel (23) zusammenwirkt, in dessen Bügellaschen sich koaxiale Bohrungen befinden, die für die Aufnahme des Elements (25) der Mittel zur Fixierung an dem Transportwagen mit der genannten Buchse (18) koaxial ausrichtbar ist.

**Claims**

1. Combined attachment device for transporting a turbo-machine unit and hoisting it within an aircraft nacelle (10) said device, being secured to the casing (11) of the turbo-machine, comprising means for securing it to the transport carriage and means for hoisting the turbo-machine into position in the nacelle (10), characterised in that the means of fixing to the transport carriage and the hoisting means are formed with common elements constituted by two clevises (13) secured to the casing (11) on a horizontal diameter, the cheeks (16, 17) of the clevises (13) being provided with co-axial bores, each device (13) receiving in removable manner a bush (18) co-operating at its outer surface with the bores and one of the eyes (15) of a rod (14) the other eye (22) of which co-operates with the hoisting means, and at its inner surface with at least one element (25) of the transport means.

2. Device according to claim 1, characterised in that the bushes (18) have at one end a collar (19) abutting one of the cheeks of the clevises (13) and at the other end a groove (21) receiving a circlip (20) abutting the other check of the clevises.

3. Device according to claim 1 or 2, characterised in that the element (25) of the means for securing to the transport carriage ist constituted by a pin having a stop (26) at one end and a clip (27) at the other end.

4. Device according to one of claims 1 to 3, characterised in that the element (25) of the means for securing to the transport carriage co-operates with a clevises (23) secured at the end of the arms of the transport carriage, said clevises having in its cheeks co-axial bores able to be placed co-axially with the bush (18) to receive the element (25) of the means for fixing to the transport carriage.

0 089 866

FIG.:1

FIG.:3

FIG.:2

0 089 866

FIG.:4

FIG.:5

FIG.:6